# EUROPÄISCHE PATENTSCHRIFT

(11) **EP 1 058 704 B1**
(45) Veröffentlichungstag und Bekanntmachung des Hinweises auf die Patenterteilung: **13.03.2002**
(21) Anmeldenummer: 98966341.4
(22) Anmeldetag: 16.12.1998
(51) Int. Cl.: C08G 69/00, C08G 69/04

(54) **HERSTELLUNG VON POLYAMIDEN DURCH REAKTIVDESTILLATION**
PRODUCTION OF POLYAMIDES BY REACTIVE DISTILLATION
PROCEDE DE PRODUCTION DE POLYAMIDES PAR DISTILLATION REACTIVE

(30) Priorität: 27.02.1998 DE 19808407
(43) Veröffentlichungstag der Anmeldung: 13.12.2000
(73) Patentinhaber: BASF AKTIENGESELLSCHAFT, 67056 Ludwigshafen (DE)
(72) Erfinder: LEEMANN, Martin, D-69124 Heidelberg (DE); HILDEBRANDT, Volker, D-68169 Mannheim (DE); THIELE, Heino, D-67063 Ludwigshafen (DE); ESPIG, Stefan, D-67105 Schifferstadt (DE)
(74) Vertreter: Isenbruck, Günter, Dr.
(86) Internationale Anmeldenummer: EP9808239
(87) Internationale Veröffentlichungsnummer: WO9943732

(56) Entgegenhaltungen:
- EP-A- 0 479 306
- US-A- 3 900 450
- US-A- 4 568 736

## Beschreibung

Die Erfindung betrifft ein kontinuierliches Verfahren zur Herstellung von Polyamiden, deren Oligomeren oder Gemischen davon, gegebenenfalls mit weiteren Umsetzungsprodukten, durch Umsetzung von Aminonitrilen und gegebenenfalls weiteren polyamidbildenden Monomeren und/oder Oligomeren mit Wasser.

Die durch hydrolytische Direktpolymerisation von Aminonitrilen hergestellten Polyamide enthalten häufig Anteile noch nicht vollkommen hydrolysierter Zwischenprodukte. Diese Zwischenprodukte reduzieren den Molekulargewichtsaufbau und wirken sich auf die Qualität der Polyamide eventuell negativ aus. Ursache für ihr Vorhandensein ist unter anderem die unvollständige Abtrennung von Ammoniak, der als Reaktionsprodukt entsteht, aus der Polymerschmelze.

Man kann sich dadurch behelfen, daß man das Edukt Wasser im Falle von kontinuierlicher oder diskontinuierlicher Umsetzung stark überstöchiometrisch dosiert. um das Reaktionsgleichgewicht auf die gewünschte Produktseite zu verschieben und/oder die Reaktionszeiten zu verlängern, was insgesamt eine energetisch ungünstige Fahrweise erfordert und den Anteil unerwünschter Neben- oder Zersetzungsprodukte vergrößern kann. Man kann als weitere Maßnahme die Reaktion in mehreren Reaktionsstufen durchführen, was eine aufwendige Verfahrenstechnik zur Folge hat.

Eine übliche technische Lösung ist eine einphasige Fahrweise während der Hydrolyse und Prepolymerisierung. Sie erfordert aber hohe Betriebsdrücke und dafür geeignete Druckapparate, um leichtflüchtige Komponenten - insbesondere Ammoniak - in Lösung zu halten. Für den Wärme- und Stoffaustausch werden bei einphasiger Fahrweise mehrere separate Apparate zum Wärmeaustauschen und Mischen erforderlich.

US 4.568,736 betrifft die Herstellung von Polyamid aus Aminonitrilen in Gegenwart sauerstoffhaltiger Phosphor-Katalysatoren. Dabei wird die Umsetzung vorzugsweise in einem Batch-Verfahren durchgeführt. Auch eine kontinuierliche Durchführung ist möglich, beispielsweise in einer Reaktorkaskade. Aminonitrile und Wasser werden in einem Reaktor umgesetzt, wobei Ammoniak in der Dampfphase vorzugsweise kontinuierlich aus der Reaktionszone entfernt wird. Beispielsweise wird Ammoniak über ein Entspannungsventil aus dem Reaktionsgefäß entfernt. Es kann unter autogenem Druck gearbeitet werden. Am Ende der Reaktion ist es möglich. das Reaktionsgefäß mit Inertgas zu reinigen. Die Umsetzung wird in Gegenwart eines sauerstoffhaltigen Phosphor-Katalysators wie Phosphorsäure durchgeführt. Dabei handelt es sich um einen homogenen Katalysator, der im Produkt verbleibt. Bei der Abtrennung von Ammoniak aus dem Reaktionsgemisch über ein Entspannungsventil handelt es sich um eine einstufige Trennung.

Ziel eines neuen Verfahrens sollte es sein, das Verweilzeitspektrum bei der Umsetzung eng zu halten, damit keine uneinheitlichen Reaktionszeiten auftreten, die sich negativ auf die Produktqualität auswirken.

Aufgabe war es daher, ein Verfahren zur Herstellung von Polyamiden zu entwickeln, das aufgrund von verringerten Einsatzstoff- und Energiekosten und reduziertem apparativen Aufwand kostengünstiger arbeitet und gleichzeitig durch eine vorteilhafte Verfahrensführung mit verbesserter Leichtsiederabtrennung den Umsatz von Zwischenprodukten erhöht.

Die Aufgabe wird erfindungsgemäß gelöst durch ein kontinuierliches Reaktivdestillationsverfahren zur Herstellung von Polyamiden, deren Oligomeren oder Gemischen davon, gegebenenfalls mit weiteren Umsetzungsprodukten, durch Umsetzung von Aminonitrilen und gegebenenfalls weiteren polyamidbildenden Monomeren und/oder Oligomeren mit Wasser im Gegenstrom in einer Reaktivdestillationsvorrichtung, die mehrere theoretische oder reale Trennstufen aufweist, bei der in der Reaktivdestillationsvorrichtung das Umsetzungsprodukt aus dem Sumpf ausgeschleust und entstehendes Ammoniak und gegebenenfalls weitere entstehende niedermolekulare Verbindungen und Wasser über Kopf abgezogen werden.

Reaktivdestillationen an sich sind aus dem Bereich der technischen, niedermolekularen Chemie hinlänglich bekannt. Im Bereich der hochviskosen Systeme. insbesondere der Polymerisationen sind sie hingegen wenig beschrieben. US 3,900,450 beschreibt beispielsweise die Reaktivdestillation zur Herstellung von Polyamid 6.6.

Die Lösung der Aufgabe erfolgt durch die Kombination von Reaktion und thermischer Trenntechnik in einem einzigen Apparat (= Reaktivdestillation), gekennzeichnet durch eine zweiphasige Fahrweise während der Hydrolyse und Polymerisation. Dieses Verfahrenskonzept wird im folgenden als Reaktivdestillation bezeichnet. Als Apparate kommen z.B. Kolonnen mit oder ohne Einbauten oder Blasensäulen zum Einsatz.

In einer möglichen Fahrweise werden zum Beispiel Aminonitril und Wasser in der oberen Hälfte der Kolonne eingespeist. Die bei der Reaktion entstehenden Leichtsieder (Ammoniak und Wasser) können dann im Kopf der Kolonne angereichert und abgeführt werden, während das Wertprodukt aus Oligomeren und Polyamid als Schwersieder im Sumpf anfällt.

Durch diese integrierte Prozeßführung mit kontinuierlicher Produktabtrennung wird ein idealer, paralleler Wärme- und Stoffaustausch mit hohem exergetischem Wirkungsgrad realisiert, der zudem durch ein schnelles Aufheizen der Edukte und ihre gleichmäßige Vermischung gekennzeichnet ist. Die Umsetzung kann unter Eigendruck durchgeführt werden.

Für das vorliegende Reaktionssystem gewährleistet die Gegenstromführung von Präpolymer und dem Reaktionsprodukt Ammoniak, kombiniert mit der kontinuierlichen Ammoniakabtrennung über das Kopfprodukt von zum Beispicl Kolonne oder Blasensäule, sehr niedrige Ammoniakgehalte in den Teilen des Apparates, die weitgehend zu Wertprodukten umgesetztes Aminonitril enthalten.

Es wurde gefunden, daß durch das erfindungsgemäße Verfahren höhere Umsätze zum Wertprodukt als ohne kontinuierliche Ammoniakabtrennung über das Kopfprodukt erreicht werden, wodurch die Reaktionszeit verkürzt und die Bildung unerwünschter Nebenkomponenten reduziert wird.

Zur Unterstützung der Umsetzung können beliebige Katalysatoren eingesetzt werden, die die Hydrolyse und oder Kondensation beschleunigen. Bevorzugt sind solche Katalysatoren, die entweder in fester Form eingebracht und folglich leicht vom Wertprodukt abgetrennt werden können oder aber als Beschichtung auf Kolonnenteilen vorliegen.

Gegenstand der Erfindung ist ein kontinuierliches Verfahren zur hydrolytischen Umsetzung von Aminonitrilen zu Polyamid und/oder dessen Vorprodukten und gegebenenfalls weiteren polyamidbildenden Mono- und Oligomeren zu Polyamid.

Als Reaktivdestillationsvorrichtung können alle geeigneten Vorrichtungen eingesetzt werden, die eine Umsetzung der Reaktanden und die gasförmige Ausschleusung des entstehenden Ammoniaks und gegebenenfalls Wassers erlauben. Die Reaktivdestillationsvorrichtung weist mehrere theoretische Trennstufen auf. In einer bevorzugten Ausführungsform der Erfindung wird als Reaktivdestillationsvorrichtung eine Bodenkolonne, Blasensäule oder Trennwandkolonne eingesetzt.

Arbeitet man mit Bodenkolonnen, wird vorzugsweise Aminomtril auf einen Zwischenboden in den oberen Teil der Kolonne dosiert. Aminonitril fließt dann schwerkraftbedingt durch den Apparat nach unten und reagiert dabei kontinuierlich mit Wasser. Das entstehende Ammoniak steigt aufgrund seiner Flüchtigkeit kontinuierlich nach oben und wird rektifiziert.

Das Edukt oder Eduktgemisch wird vorzugsweise flüssig zudosiert, oder es wird ein Teil flüssig und der andere Teil, z.B. Wasserdampf als Gas in den Apparat eingespeist. Letztere Variante hat den Vorteil, daß der Dampf zusätzlich als Energieträger dienen kann. Wasserdampf steht häufig als preiswerter Energieträger zur Verfügung.

Der Apparat wird vorzugsweise so ausgelegt. daß sich auf den realen oder theoretischen Böden innerhalb der eingesetzten Kolonne in Abhängigkeit von der Verweilzeit weitgehend das thermische Gleichgewicht einstellt.

Wird als Apparat eine Trennwandkolonne oder ein auf dem Prinzip einer Trennwandkolonne arbeitender Apparat eingesetzt, können unerwünschte oder erwünschte Komponenten als Mittelsieder ausgeschleust und gewünschtenfalls an anderer Stelle dem Apparat wieder zugeführt werden. Diese Fahrweise kann Einsatzstoffverluste vermindern.

Über den Kopfkondensator können die Edukte gewünschtenfalls vorgewärmt werden.

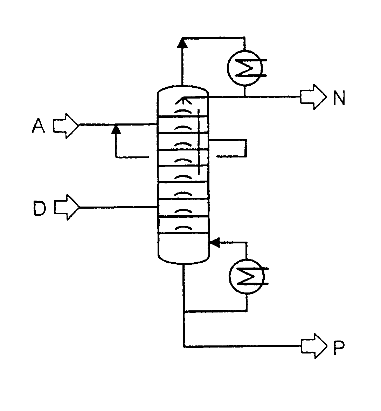

Eine derartige Prinzipskizze des erfindungsgemäßen Verfahrens zeigt in der Zeichnung Fig. 1:
- Fig. 1:: Verfahrensskizze einer Reaktivdestillation von Aminonitrilen zu Polyamid durch den Einsatz einer Bodenkolonne. Dabei bedeuten A: Aminonitril, D: Dampf, N: Ammoniak, P: Polyamidpräpolymer.

Es wurde zudem gefunden, daß Blasensäulen alternativ zu Bodenkolonnen besonders bevorzugt dann eingesetzt werden können, wenn die Viskosität des Polyamids im Sumpfprodukt größer als etwa 150 mPas ist, da dann Anbackungen an stationären Kolonnenteilen vermehrt auftreten können. Die Einspeisung der Edukte sollte bei Blasenkolonnen an ungefähr identischen Positionen wie in einer Reaktivdestillationskolonne erfolgen, das heißt, die Edukte werden im oberen Teil der Blasensäule zudosiert. Um eine Rückmischung innerhalb der Säule zu reduzieren, können die Säulen gewünschtenfalls mit dem Fachmann bekannten Einbauten zur Verminderung der Rückvermischung ausgerüstet werden.

Es wurde gefunden, daß auch das Einbringen von Katalysatorpellets in den Apparat zu einer Vergleichmäßigung der Gas- und Flüssigkeitsströrnung in der Säule führt.

Die Ammoniakreduktion in der Schmelze kann durch Strippen mit Inertgasen (wie Stickstoff) zusätzlich unterstützt werden. Dazu wird das Gas in einen oder mehrere Böden, beziehungsweise bei Blasensäulen an einer oder mehreren Stellen durch geeignete Vorrichtungen eingeleitet.

Als Aminonitril können prinzipiell alle Aminonitrile, das heißt Verbindungen, die sowohl mindestens eine Amino- als auch mindestens eine Nitrilgruppe aufweisen, eingesetzt werden. Unter diesen sind ω-Aminonitrile bevorzugt, wobei unter letzteren insbesondere ω-Aminoalkylnitrile mit 4 bis 12 C-Atomen, weiter bevorzugt 4 bis 9 C-Atomen im Alkylenrest, oder ein Aminoalkylarylnitril mit 8 bis 13 C-Atomen eingesetzt werden, wobei dort solche bevorzugt werden, die zwischen der aromatischen Einheit und der Amino- und Nitrilgruppe einen Alkyl-Spacer mit mindestens einem C-Atom aufweisen. Unter den Aminoalkylarylnitrilen sind insbesondere solche bevorzugt, die die Amino- und Nitrilgruppe in 1,4-Stellung zueinander aufweisen.

Als ω-Aminoalkylnitril setzt man weiter bevorzugt lineare ω-Aminoalkylnitrile ein, wobei der Alkylenrest (-CH₂-) vorzugsweise 4 bis 12 C-Atome, weiter bevorzugt von 4 bis 9 C-Atome enthält, wie 6-Amino-1-cyanopentan (6-Aminocapronitril), 7-Amino-1-cyanohexan, 8-Amino-1-cyanoheptan, 9-Amino-1-cyanooctan, 10-Amino-1-cyanononan, besonders bevorzugt 6-Aminocapronitril.

6-Aminocapronitril erhält man üblicherweise durch Hydrierung von Adipodinitril nach bekannten Verfahren, beispielsweise beschrieben in DE-A 836, 938. DE-A 848,654 oder US 5,151,543.

Selbstverständlich können auch Gemische mehrerer Aminonitrile oder Gemische eines Aminonitrils mit weiteren Comonomeren, zum Beispiel Caprolactam oder das untenstehend näher definierte Gemisch, eingesetzt werden.

Als weitere polyamidbildende Monomere kann man beispielsweise Dicarbonsäuren. wie Alkandicarbonsäuren mit 6 bis 12 Kohlenstoffatomen, insbesondere 6 bis 10 Kohlenstoffatomen, wie Adipinsäure, Pimelinsäure, Korksäure, Azelainsäure oder Sebazinsäure sowie Terephthalsäure und Isophthalsäure, Diamine wie C₄-C₁₂-Alkylendiamine, insbesondere mit 4 bis 8 Kohlenstoffatomen wie Hexamethylendiamin, Tetramethylendiamin oder Octamethylendiamin, ferner m-Xylylendiamin, Bis-(4-aminophenyl)methan, Bis-(4-aminophenyl)-propan-2,2 oder Bis-(aminocyclohexyl)methan, sowie Mischungen von Dicarbonsäuren und Diaminen jeweils für sich in beliebigen Kombinationen im Verhältnis zueinander, jedoch vorteilhaft im äquivalenten Verhältnis einsetzen. Des weiteren ist es auch möglich, Salze aus den genannten Dicarbonsäuren und Diaminen einzusetzen, wie Hexamethylendiammoniumadipat, Hexamethylendiammoniumterephthalat, oder Tetramethylendiammoniumadipat, Hexamethylendiammoniumterephthalat, insbesondere aber das Salz aus Adipinsäure und Hexamethylendiamin, Hexamethylendiammoniumadipat, (sogenanntes AH-Salz) als Bestandteil einer Mischung mit Aminonitrilen und/oder Lactamen.

Als Dicarbonsäuren kann man aliphatische C₄-C₁₀-α,ω-Dicarbonsäuren, wie Bernsteinsäure, Glutarsäure, Adipinsäure, Pimelinsäure, Korksäure, Azelainsäure, Sebazinsäure, bevorzugt Adipinsäure und Sebazinsäure, besonders bevorzugt Adipinsäure, und aromatische C₈-C₁₂-Dicarbonsäuren wie Terephthalsäure sowie C₅-C₈-Cycloalkandicarbonsäureen wie Cyclohexandicarbonsäuren einsetzen.

Als α, ω-Diamin mit 4 bis 10 Kohlenstoffatomen kann man Tetramethylendiamin. Pentamethylendiamin, Hexamethylendiamin, Heptamethylendiamin. Octamethylendiamin, Nonamethylendiamin und Decamethylendiamin, bevorzugt Hexamethylendiamin, einsetzen.

Als α, ω-C₂-C₁₂-Dinitril setzt man bevorzugt aliphatische Dinitrile, wie 1.4-Dicyanbutan (Adipodinitril), 1,5-Dicyanpentan, 1,6-Dicyanhexan, 1,7-Dicyanheptan, 1,8-Dicyanoctan, 1,9-Dicyannonan, 1,10-Dicyandecan, besonders bevorzugt Adipodinitril, ein.

Gewünschtenfalls kann man auch Diamine, Dinitrile und Aminonitrile, die sich von verzweigten Alkylen- oder Arylen- oder Alkylarylenen ableiten, verwenden.

Als α, ω-C₅-C₁₂-Aminosäure kann man 5-Aminopentansäure, 6-Aminohexansäure, 7-Aminoheptansäure, 8-Aminooctansäure, 9-Aminononansäure, 10-Aminodecansäure, 11-Aminoundecansäure und 12-Aminododecansäure, bevorzugt 6-Aminohexainsäure, einsetzen. Es können auch beliebige Mischungen der genannten Verbindungen, Diamine und Disäuren eingesetzt werden.

Als Ausgangsstoffe im erfindungsgemäßen Verfahren eignen sich ferner Gemische mit Aminocarbonsäureverbindungen der allgemeinen Formel I

H₂N-(CH₂)ₘ-C(O)R¹ (I)

in der R¹ für -OH, -O-C₁₋₁₂-Alkyl oder -NR²R³ unabhängig voneinander Wasserstoff, C₁₋₁₂-Alkyl und C₅₋₈-Cycloalkyl, und m für 3, 4, 5, 6, 7, 8, 9, 10, 11 oder 12 stehen.

Besonders bevorzugte Aminocarbonsäureverbindungen sind solche, in denen R¹ OH, -O-C₁₋₄-Alkyl wie -O-Mcthyl, -0-Ethyl, -O-n-Propyl, -O-i-Propyl, -O-n-Butyl,-O-sek.Butyl, -O-tert.Butyl und -NR²R³ wie -NH₂, -NHMe, -NHEt, -NMe₂ und -NEt₂ bedeuten, und m für 5 steht.

Ganz besonders bevorzugt sind 6-Aminocapronsäure, 6-Aminocapronsäuremethylester, 6-Aminocapronsäureethylester, 6-Aminocapronsäuremethylamid, 6-Aminocapronsäuredimethylamid, 6-Aminocapronsäureethylamid. 6-Aminocapronsäuredithylamid und 6-Aminocapronsäureamid.

Die Ausgangsverbindungen sind im Handel crhältlich oder beispielsweise gemäß EP-A-O 234 295 und Ind. Eng. Chem. Process Des. Dev. 17 (1978)9-16 herstellbar.

Vorzugsweise werden als polyamidbildende Monomere Aminonitrile zusammen mit Wasser, besonders bevorzugt in einem molaren Verhältnis im Bereich von 1 : 1 bis 20 eingesetzt, bezogen auf den Gesamtprozeß. Besonders bevorzugt ist dabei Aminocapronitril, bei einem ACN : Wasser-Verhältnis im Gesamtprozeß von 1 : 1 bis 6.

Zudem können als polyamidbildende Monomere Gemische aus
1 bis 99, vorzugsweise 20 bis 99, insbesondere 50 bis 99 Gew.-% Aminonitrilen.
1 bis 99, vorzugsweise 1 bis 80, insbesondere 1 bis 50 Gew.-% Lactamen und
0 bis 49 Gew.-% Diaminen und/oder Dicarbonsäuren oder Salze daraus
eingesetzt werden.

Es können auch Gemische aus polyamidbildenden Monomeren und Oligomercn eingesetzt werden.

Vorzugsweise werden als polyamidbildende Monomere neben Aminocapronitril gewünschtenfalls Caprolactam und/oder Hexamethylendiammoniumadipat ("AH-Salz") verwendet.

Die Umsetzung kann in Gegenwart von Brönsted-sauren Katalysatoren durchgeführt werden. Dabei werden vorzugsweise Brönsted-saure Heterogenkatalysatoren eingesetzt.

Als Katalysatoren kommen allgemein neben vielfach in der Literatur beschriebenen Säurekatalysatoren wie Phosphorsäure etc. besonders heterogene Katalysatoren in Frage. Bevorzugt werden Brönsted-saure Katalysatoren eingesetzt, ausgewählt aus einem Beta-Zeolith-, Schichtsilicat- oder einem Festbettkatalysator, der im wesentlichen aus TiO₂ mit 70 bis 100 % Anatas und 0 bis 30 % Rutil besteht, in dem bis zu 40 % des TiO₂ durch Wolframoxid ersetzt sein können.

Beispielsweise können entsprechende TiO₂-Modifikationen, die von Finnti (Typ S150) angeboten werden, Verwendung finden.

Die heterogenen Katalysatoren können beispielsweise als Suspension, auf Füllkörper gesintert oder als gegebenenfalls beschichtete Katalysatorpackung oder - schüttung oder- einbauten in den Apparat eingebracht werden. Sie können auch auch als Wandbelegung oder -beschüttung im Apparat vorliegen, so daß eine Abtrennung von Reaktionsgemisch einfach erfolgt.

Die Wasserkonzentration auf der Mehrzahl der theoretischen oder realen Böden, die unterhalb der Einspeisestelle der Aminonitrile liegen, erreicht sehr hohe Konzentrationen (Molverhältnis Schwerersieder : Wasser etwa 1 : 4 bis 1 : 9) so daß, auch wenn die Komponenten stöchiometrisch in den Apparat dosiert werden, im Apparat selbst Wasser überstöchiometrisch vorliegen kann, was das Reaktionsgleichgewicht auf die Produktseite verschieben und die Geschwindigkeit der Gleichgewichtseinstellung erhöhen kann.

Die Temperatur für die Umsetzung sollte im Reaktionsteil der Kolonne, also unterhalb der Edukteinspeisung, in Abhängigkeit von der Wasserkonzentration, der Verweilzeit, der Verwendung von Katalysatoren sowie der Einsatzstoffzusammensetzung beziehungsweise Konzentration etwa 180°C bis 300°C, bevorzugt 200 bis 280°C und besonders bevorzugt 220 bis 270°C betragen. Da sich entlang der kolonnenförmigen Apparatur ein Temperaturgradient ausbildet, kann die Temperatur im Kopf und im Sumpf von den genannten Werten abweichen.

Die zweiphasige Fahrweise erlaubt eine Absenkung des zur Reaktion notwendigen Druckniveaus, da gasförmige Bestandteile nicht - wie bei einer einphasigen Fahrweise - in der Flüssigphase gehalten werden müssen. Es stellt sich vorzugsweise lediglich der Eigendruck des Systems in Abhängigkeit von der Temperatur ein. Dieser beträgt etwa 10 bis 60 bar. Der apparative Aufwand wird durch die Integration von verfahrenstechnischen Operationen wie Wärme- und Stoffaustausch in ein und demselben Apparat reduziert.

Bei einer großen Zahl an theoretischen Böden nähert sich das Strömungsprofil der Flüssigphase im Apparat einer idealen Pfropfenströmung an, was zu einem sehr gleichmäßigen Verweilzeitspektrum im Apparat führt.

Eine Ausschleusung unerwünschter oder gewünschter Vor- oder Nebenprodukte, deren Siedepunkt zwischen Ammoniak und dem Polyamidpräpolymer liegt, kann über eine Trennwandkolonne erfolgen.

Das erhaltene Wertprodukt hat in Abhängigkeit von der Verweilzeit in der Apparatur den Prozeßtemperaturen, den Druckverhältnissen und weiterer verfahrenstechnischer Parameter ein unterschiedliches, in weiten Grenzen einstellbares Molekulargewicht sowie unterschiedliche Eigenschaften. Gewünschtenfalls kann nach der Reaktivdestillation eine weitere Verarbeitung des Produktes zur Einstellung gewünschter Produkteigenschaften erfolgen. Man kann das erhaltene Polyamid z.B. nach an sich bekannten Methoden, wie z.B. in der DE-A 43 21 683 (S. 3, Z. 54 bis S. 4, Z. 3) ausführlich beschrieben sind, aufarbeiten.

In einer bevorzugten Ausführungsform kann man den Gehalt an cyclischem Dimer im erfindungsgemäß erhaltenen Polyamid-6 weiter reduzieren, indem man das Polyamid zuerst mit einer wäßrigen Lösung von Caprolactam und anschließend mit Wasser extrahiert und/oder der Gasphasenextraktion (beispielsweise beschrieben in der EP-A-0 284 968) unterwirft. Die bei dieser Nachbehandlung anfallenden niedermolekularen Bestandteile wie Caprolactam und seine linearen sowie cyclischen Oligomere, kann man in die erste und/oder zweite und/oder dritte Stufe zurückführen

Das erfindungsgemäße Verfahren zeichnet sich durch kontinuierliche Reaktionsführung, reduzierte Energie- und Einsatzstoffkosten und einen vergleichsweise geringen apparativen Aufwand aus. Durch die kontinuierliche Produktabtrennung werden der Umsatz sowie die Umsetzungsgeschwindigkeit zum Wertprodukt im Vergleich zum diskontinuierlichen Verfahren erhöht, und gleichzeitig wird die Nebenproduktbildung reduziert. Das Verfahren kann also gegenüber bekannten Verfahren kostengünstiger arbeiten und ein höhenwertigeres Produkt liefern.

Die Erfindung wird nachstehend anhand von Beispielen näher erläutert.

### Beispiele

Als Beispiele werden Versuche beschrieben, die in einem Druckbehälter ausgeführt wurden und den Ablauf der Reaktion beschreiben. Zusätzlich werden Beispiele aufgeführt, die den Einsatz geeigneter Kolonnen aufzeigen.

### Reaktionsbeispiele

### Reaktionsbeispiel R1 (kontinuierliche Entgasung):

In einem 2 Liter-Druckbehälter mit Heizmantel und Ankerrührer wurden 1400 g einer Reaktionsmischung aus Aminocapronitril und Wasser im molaren Verhältnis 1 : 4 bei 250°C gerührt. Der sich einstellende Eigendruck betrug 43 bar. Während der Reaktionszeit von 3 Stunden wurde kontinuierlich Wasser mit einem Massestrom von 100 g/h in den Reaktor gefahren. Über ein Überströmventil wurde ebenfalls fortwährend aus der Gasphase ein Wasser/Ammoniakgemisch abgeführt.

### Reaktionsbeispiel R2 (kontinuierliche Entgasung):

In einem 2 Liter-Druckbehälter mit Heizmantel und Ankerrührer wurden 1400 g einer Reaktionsmischung aus Aminocapronitril und Wasser im molaren Verhältnis 1 : 0,8, bei 250°C gerührt. Der sich einstellende Eigendruck betrug 27 bar. Während der Reaktionszeit von 3 Stunden wurde kontinuierlich Wasser mit einem Massestrom von 100 g/h in den Reaktor gefahren. Über ein Überströmventil wurde ebenfalls fortwährend aus der Gasphase ein Wasser/Ammoniakgemisch abgeführt.

### Vergleichsbeispiel V1 (diskontinuierlich):

In einem Druckbehälter mit Heizmantel und Ankerrührer wurden 1400 g einer Reaktionsmischung aus Aminocapronitril und Wasser im molaren Verhältnis 1 : 4 bei 250°C im geschlossenen Reaktor gerührt. Der sich einstellende Eigendruck betrug 48 bar. Die Versuchsdauer betrug 2 Stunden.

### Vergleichsbeispiel V2 (diskontinuierlich):

In einem 2 Liter-Druckbehälter mit Heizmantel und Ankerrührer wurden 1400 g einer Reaktionsmischung aus Aminocapronitril und Wasser im molaren Verhältnis 1 : 1 bei 250°C im geschlossenen Reaktor gerührt. Der sich einstellende Eigendruck betrug 33 bar. Die Versuchsdauer betrug 200 Minuten.

Die Beispiele zeigen, daß bereits in einer einstufigen Abtrennung von niedrigsiedenden Reaktionsprodukten durch einen kontinuierlichen Gegenstrom mit Wasser der Umsatz signifikant höher ist und der Anteil höherer Oligomere zunimmt. Dieser Effekt ist in der Reaktivdestillation mit vielen Rektifikationsstufen natürlich noch größer.

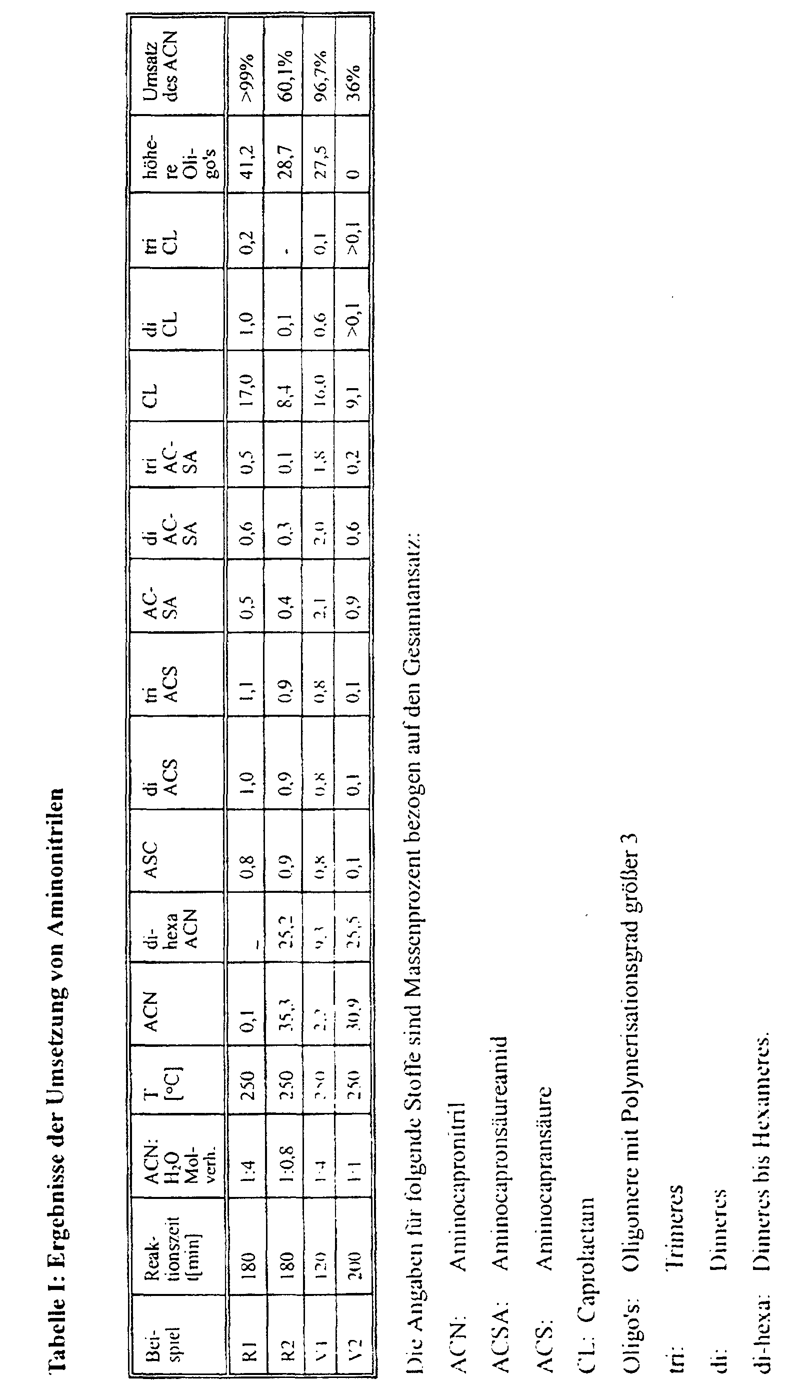

### Kolonnenbeispiele (kontinuierlich):

### Kolonnenbeispiel 1

Eine Bodenkolonne mit 30 Glockenböden wurde bei einem Systemdruck von 30 bar betrieben. Auf Boden 29, dem zweitobersten Boden, wurden 10,1 kg/h Aminocapronitril bei 250°C dosiert. Auf Boden 2 wurden 2,5 kg/h auf 300°C überhitzter Wasserdampf eingespeist. Die hydrodynamische Verweilzeit des Reaktionsgemisches in der Kolonne betrug 2,3 h. Als Kopfprodukt wurde Ammoniak mit einem Massenanteil von 0.1 Gew.-% Wasser bei ca. 70°C erhalten. Das Sumpfprodukt war ein PA 6-Präpolymer mit einem Wasseranteil 8,5 Gew.-%. Der Anteil des Wassers auf den Böden unterhalb der Einspeisungsstelle betrug bis ca. 50 Gew.-% oder umgerechnet ca. 80 mol%.

### Kolonnenbeispiel 2

Eine Bodenkolonne mit 30 Glockenböden wurde bei einem Systemdruck von 30 bar betrieben. Auf Boden 29, den zweitobersten Boden, wurde ein Gemisch aus 8,4 kg/h Aminocapronitril und 1,5 kg/h Wasser mit 250°C eingespeist. Auf Boden 2 wurden 2 kg/h auf 300°C überhitzter Wasserdampf eingespeist. Die hydrodynamische Verweilzeit des Reaktionsgemisches in der Kolonne betrug 2,8 h. Als Kopfprodukt wurde Ammoniak mit einem Massenanteil von 2 Gew.-% Wasser erhalten. Das Sumpfprodukt war ein PA 6-Präpolymer mit einem Wasseranteil von 8,7 Gew.-%. Am Fuß der Kolonne befand sich ein Umlaufverdampfer mit Zwangsförderung.

### Kolonnenbeispiel 3

In eine Blasensäule, die mit zylinderförmigen Katalysatorpellets von 3 mm Durchmesser und 5 mm Länge gefüllt wurde und durch Siebböden in 6 Bereiche unterteilt wurde, wurde unterhalb des obersten Siebbodens ein Gemisch aus 5 kg/h Aminocapronitril und 2 kg/h Wasser eingespeist. Oberhalb der Einspeisestelle saß ein im Durchmesser über dem Säulendurchmesser liegendes schüttungsgefülltes Rohr als Rektifikationsteil. Am Fuß der Blasensäure befand sich ein Umlaufverdampfer mit Zwangsförderung. Die hydrodynamische Verweilzeit in der schüttungsgefüllten Blasensäule betrug 2,3 h. Der sich in der Säule einstellende Druck betrug ca. 32 bar. Als Sumpfprodukt fiel ein Polyamidpräpolymer mit einem Wasseranteil von 11 Gew.-% an. Das Kopfprodukt war Ammoniak mit 2 Gew.-% Wasser.

## Patentansprüche

1. Kontinuierliches Reaktivdestillationsverfahren zur Herstellung von Polyamiden, deren Oligomeren oder Gemischen davon, gegebenenfalls mit weiteren Umsetzungsprodukten, durch Umsetzung von Aminonitrilen und gegebenenfalls weiteren polyamidbildenden Monomeren und/oder Oligomeren mit Wasser im Gegenstrom in einer Reaktivdestillationsvorrichtung, die mehrere theoretische oder reale Trennstufen aufweist, bei der in der Reaktivdestillationsvorrichtung das Umsetzungsprodukt aus dem Sumpf ausgeschleust und entstehendes Ammoniak und gegebenenfalls weitere entstehende niedermolekulare Verbindungen und Wasser über Kopf abgezogen werden.

2. Verfahren nach Anspruch 1, **dadurch gekennzeichnet, daß** die Umsetzung unter Eigendruck durchgeführt wird.

3. Verfahren nach Anspruch 1 oder 2, **dadurch gekennzeichnet, daß** die Umsetzung in einer Bodenkolonne, Blasensäule oder Trennwandkolonne durchgeführt wird.

4. Verfahren nach einem der Ansprüche 1 bis 3, **dadurch gekennzeichnet, daß** als polyamidbildende Monomere Aminonitrile und Wasser in einem molaren Verhältnis, bezogen auf den Gesamtprozeß, in einem Bereich von 1:1 bis 1:20 eingesetzt werden.

5. Verfahren nach einem der Ansprüche 1 bis 3, **dadurch gekennzeichnet, daß** als polyamidbildende Monomere Gemische aus
1 bis 99 Gew.-% Aminonitrilen,
1 bis 99 Gew.-% Lactamen und
0 bis 49 Gew.-% Diaminen und/oder Dicarbonsäuren oder Salzen daraus
eingesetzt werden.

6. Verfahren nach einem der Ansprüche 1 bis 5, **dadurch gekennzeichnet, daß** die Reaktivdestillation in Gegenwart von Brönsted-sauren Katalysatoren durchgeführt wird.

7. Verfahren nach Anspruch 6, **dadurch gekennzeichnet, daß** Brönsted-saure Heterogenkatalysatoren eingesetzt werden.

8. Verfahren nach einem der Ansprüche 1 bis 7, **dadurch gekennzeichnet, daß** Wasser in Form von Wasserdampf eingesetzt wird.

9. Verfahren nach einem der Ansprüche 1 bis 8, **dadurch gekennzeichnet, daß** bei der Reaktivdestillation zusätzlich mit einem Inertgas gestrippt wird.

## Claims

1. A continuous reactive distillation process for preparing polyamides, their oligomers or mixtures thereof, where appropriate with other reaction products, by countercurrent reaction of amino nitriles and, where appropriate, other polyamide-forming monomers and/or oligomers with water in a reactive distillation apparatus which has a plurality of theoretical or real separation stages, wherein the reaction product is discharged from the bottom of the reactive distillation apparatus, and ammonia which is produced and, where appropriate, other low molecular weight compounds which are produced, and water, are taken off overhead.

2. A process as claimed in claim 1, wherein the reaction is carried out under autogenous pressure.

3. A process as claimed in claim 1 or 2, wherein the reaction is carried out in a plate column, bubble column or dividing wall column.

4. A process as claimed in any of claims 1 to 3, wherein amino nitriles, as polyamide-forming monomers, and water are employed in a molar ratio, based on the complete process, in a range from 1 : 1 to 1 : 20.

5. A process as claimed in any of claims 1 to 3, wherein mixtures of
1 to 99% by weight amino nitriles,
1 to 99% by weight lactams and
0 to 49% by weight diamines and/or dicarboxylic acids or salts thereof
are employed as polyamide-forming monomers.

6. A process as claimed in any of claims 1 to 5, wherein the reactive distillation is carried out in the presence of Brönsted acid catalysts.

7. A process as claimed in claim 6, wherein heterogeneous Brönsted acid catalysts are employed.

8. A process as claimed in any of claims 1 to 7, wherein water is employed in the form of steam.

9. A process as claimed in any of claims 1 to 8, wherein additional stripping with an inert gas is carried out in the reactive distillation.

## Revendications

1. Procédé de distillation en continu pour la préparation de polyamides, de leurs oligomères ou de leurs mélanges, éventuellement avec d'autres produits de réaction, par réaction d'aminonitriles et éventuellement d'autres monomères et/ou oligomères générant des polyamides avec de l'eau, en contre-courant dans un dispositif de distillation réactive présentant plusieurs étapes de séparation théoriques ou réelles, dans lequel, dans le dispositif de distillation réactive, le produit de réaction est soutiré en fraction de queue, et éventuellement d'autres composés à bas poids moléculaire formés et de l'eau sont évacués en fraction de tête.

2. Procédé selon la revendication 1, **caractérisé en ce que** la réaction est entreprise sous pression propre.

3. Procédé selon la revendication 1 ou 2, **caractérisé en ce que** la réaction est entreprise dans une colonne à plateaux, une colonne à bulles ou une colonne à paroi de séparation.

4. Procédé selon l'une des revendications 1 à 3, **caractérisé en ce que** l'on met en oeuvre, en tant que monomère générant des polyamides, des aminonitriles et de l'eau en rapport molaire, par rapport à l'ensemble du processus, de l'ordre de 1:1 à 1:20.

5. Procédé selon l'une des revendications 1 à 3, **caractérisé en ce que** l'on met en oeuvre, en tant que monomères générant des polyamides, des mélanges de
1 à 99% en poids d'aminonitriles,
1 à 99% en poids de lactames et
0 à 49% en poids de diamines et ou d'acide dicarboxyliques ou de leurs sels.

6. Procédé selon l'une des revendications 1 à 5, **caractérisé en ce que** la distillation réactive est entreprise en présence de catalyseurs acides de Brönsted.

7. Procédé selon la revendication 6, **caractérisé en ce que** l'on met en oeuvre des catalyseurs acides de Brönsted hétérogènes.

8. Procédé selon l'une des revendications 1 à 7, **caractérisé en ce que** l'eau est mise en oeuvre sous forme de vapeur d'eau.

9. Procédé selon l'une des revendications 1 à 8, **caractérisé en ce que**, lors de la distillation réactive, on procède à un strippage au moyen d'un gaz inerte.
